# EUROPEAN PATENT APPLICATION

(11) **EP 4 685 169 A1**
(43) Date of publication of application: **28.01.2026**
(21) Application number: 24306262.7
(22) Date of filing: 25.07.2024
(51) Int. Cl.: C08G 18/24, B29D 11/00, C08G 18/38, C08G 18/73, G02B 1/04, C09J 7/30

(54) **CLOSURE MEMBER FOR MANUFACTURING A POLYMERIC CAST SUBSTRATE**

(71) Applicant: Essilor International, 94220 Charenton-Le-Pont (FR)
(72) Inventor: FROMENTIN, Pierre, 10240 BANGKOK (TH); LERTWATTANASERI, Tipparat, 10520 BANGKOK (TH)
(74) Representative: Plasseraud IP

(57) **Abstract**

The present invention relates to a method for manufacturing a polymeric cast substrate from polymerizable composition using a closure member that contains a catalyst suitable for triggering the polymerization of the polymerizable composition. The invention also relates to a closure member containing the same and to the use thereof to reduce the haze in a polymeric cast substrate.

## Description

### Field

The present disclosure relates to the manufacturing of a polymeric cast substrate usable for optical articles, specifically to a catalytic closure member able to prevent or reduce the occurrence of defects in such polymeric cast substrate, such as haze, during the manufacturing process.

### Background

In the field of production of optical articles, one of the challenges comes from the presence of imperfections that can arise during the manufacturing process, notably due to the interaction between the components of mold assemblies and polymerizable compositions. These defects may manifest as cloudiness, bubbles, haze, surface irregularities, or unwanted residues.

In order to address these challenges, modifying the polymerizable compositions or the polymerization conditions was proposed. However, these modifications often introduced additional adaptations of the polymerizable composition or the production process and did not fully resolve the compatibility issues between the mold assembly components and the polymerizable composition.

For instance, prior art document CN103108918 which belongs to the field of manufacturing resin for thiourethane-based optical materials and relates to haze issues in optical substrates, describes controlling haze issues by adjusting the pH of the monomers used in the bulk polymerizable composition.

While these adjustments aim to prevent the migration of unwanted substances into the polymerizable composition, they often fall short of providing an easy to implement solution. Consequently, there is a clear need for a method that effectively minimizes the occurrence of defects, such as haze, during the manufacturing process without introducing undue complexity.

### Summary

The present disclosure proposes a method to effectively mitigate haze, without modifying the polymerizable composition nor introducing undue complexity to the manufacturing process.

According to one aspect, the present disclosure relates to a method for manufacturing a polymeric cast substrate having two opposite main surfaces and a lateral edge surface, the method comprising the steps of:
- forming a molding cavity from two mold parts corresponding to the two opposite main surfaces and a closure member corresponding to the lateral edge surface, the closure member having a contacting surface facing the molding cavity;
- filling the molding cavity with a polymerizable composition, as a result of which the contacting surface of the closure member comes into contact with the polymerizable composition;
- curing the polymerizable composition so as to obtain the polymeric cast substrate; wherein the contacting surface of the closure member contains a catalyst or an initiator suitable for triggering the polymerization of the polymerizable composition.

The method involves the use of a catalyst-containing or an initiator-containing closure member, which may be an adhesive tape or a gasket, in the casting mold assembly for sealing the molds.

Without being bound by any theory, it is assumed that when the closure member comes into contact with the liquid polymerizable composition, the catalyst present at the surface of the closure member triggers polymerization at the interface polymerizable composition/closure member, thereby forming a barrier layer that stops or slows down the migration of the constituents contained in the closure member into the polymerizable composition. This barrier formation at the edge of the mold effectively prevents the occurrence of haze and other optical defects in the polymeric cast substrate, thereby leading to the production of high-quality optical articles with improved clarity and cosmetic appearance.

The manufacturing process of the present disclosure is easy to implement. It does not require modifying the composition of the polymerizable composition or the polymerization conditions. It does not require to modify the molds of the casting mold assembly and ensures controlled distribution of the catalyst or the initiator at the edge of the substrate.

By reducing the need for post-production treatments to remove haze, the process of the present disclosure minimizes the consumption of resources such as energy and materials and reduces waste generation. This contributes to an eco-friendlier manufacturing process of polymeric cast substrates, aligned with industry needs towards greener production practices.

According to another aspect, the present disclosure relates to a closure member for use in a method for manufacturing a polymeric cast substrate having two opposite main surfaces and a lateral edge surface by filling a molding cavity with a polymerizable composition, the molding cavity being formed from two mold parts corresponding to the two opposite main surfaces and a closure member corresponding to the lateral edge surface, the closure member having a contacting surface facing the molding cavity, wherein the contacting surface of the closure member intended to be in contact with the polymerizable composition contains a catalyst or an initiator and the catalyst or the initiator is suitable for triggering the polymerization of the polymerizable composition.

According to yet another aspect, the present disclosure relates to a use of a closure member containing a catalyst or an initiator for reducing haze in a polymeric cast substrate, the polymeric cast substrate having two opposite main surfaces and a lateral edge surface,
the polymeric cast substrate being manufactured by filling a molding cavity with a polymerizable composition,
the molding cavity being formed from two mold parts corresponding to the two opposite main surfaces and a closure member corresponding to the lateral edge surface, the closure member having a contacting surface facing the molding cavity,
wherein the contacting surface of the closure member intended to be in contact with the polymerizable composition contains the catalyst or the initiator and the catalyst or the initiator is suitable for triggering the polymerization of the polymerizable composition.

As indicated, above, it is assumed that the rapid triggering of polymerization by the catalyst or the initiator at the interface polymerizable composition/closure member creates a localized barrier that effectively prevents the migration of components from the closure member into the polymerizable composition, thereby significantly reducing the incidence of haze in the polymeric cast substrate.

It is herein disclosed the following items.

A. A method for manufacturing a polymeric cast substrate having two opposite main surfaces and a lateral edge surface, the method comprising the steps of:
- forming a molding cavity from two mold parts corresponding to the two opposite main surfaces and a closure member corresponding to the lateral edge surface, the closure member having a contacting surface facing the molding cavity;
- filling the molding cavity with a polymerizable composition, as a result of which the contacting surface of the closure member comes into contact with the polymerizable composition;
- curing the polymerizable composition so as to obtain the polymeric cast substrate; wherein the contacting surface of the closure member contains a catalyst or an initiator suitable for triggering the polymerization of the polymerizable composition.

B. The method according to item A, wherein the closure member is an adhesive tape.

B1. The method according to item B, wherein the closure member is an adhesive tape containing an adhesive layer and the catalyst or the initiator is present in the adhesive layer.

B2. The method according to item B or B1, wherein the closure member is an adhesive tape containing an adhesive layer and the catalyst or the initiator is present at the surface of the adhesive layer.

C. The method according to any one of items A-B2, wherein the polymerizable composition comprises a mixture of one or more polyisocyanate(s) with one or more polythiol(s) or polyol(s).

C1. The method according to item A-B2, wherein the polymerizable composition comprises a mixture of one or more polyisocyanate(s) with one or more polythiol(s).

C2. The method according to item A-B2, wherein the polymerizable composition comprises a mixture of one or more polyisocyanate(s) with one or more polyol(s).

D. The method according to any one of items A-B2, wherein the polymerizable composition comprises an allyl monomer or allyl oligomer such as diethylene glycol bis(allyl carbonate), oligomer of diethylene glycol bis(allyl carbonate), ethylene glycol bis(allyl carbonate), oligomer of ethylene glycol bis(allyl carbonate), bisphenol A bis(allyl carbonate), oligomer of bisphenol A bis(allyl carbonate), diallyl phthalate, diallyl isophthalate, diallyl terephthalate or mixtures thereof.

E. The method according to any one of items A-D, wherein the polymerizable composition comprises a bulk catalyst or a bulk initiator, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate (KSCN) or bismuth trineodecanoate, or mixtures thereof, or the bulk initiator being chosen in particular from organic peroxides, organic azo compounds or mixtures thereof.

F. The method according to any one of items A-E, wherein the closure member comprises a catalyst or an initiator, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate (KSCN) or bismuth trineodecanoate, or mixtures thereof, or the bulk initiator being chosen in particular from organic peroxides, organic azo compounds or mixtures thereof.

G. The method according to any one of items A-F, wherein the catalyst of the closure member is the same as the bulk catalyst.

G1. The method according to any one of items A-F, wherein the initiator of the closure member is the same as the bulk initiator

H. The method according to any one of items A-G1, wherein the catalyst of the closure member is different than the bulk catalyst.

H1. The method according to any one of items A-G1, wherein the initiator of the closure member is different than the bulk initiator.

I. The method according to any one of items A-H1, wherein the polymerizable composition further comprises an internal mold release agent, such as those chosen from fluorine-containing nonionic surfactants, alkyl quaternary ammonium salts, acid phosphate ester, higher fatty acid ester, or silicon-containing nonionic surfactants.

J. The method according to any one of items A-I, wherein the closure member further comprises a water scavenging agent.

K. The method according to any one of items A-J, wherein the polymeric cast substrate is an optical article such as an ophthalmic lens.

L. The method according to any one of items A-K, wherein the polymerization conditions of the curing step include:
- a curing start temperature between 35 and 60° C lasting for 4 to 8 hours, gradually raising the temperature for 8 to 10 hours until reaching a curing final temperature between 110 and 150° C, then keeping constant at said final temperature for 4 to 8 hours; or
- a curing temperature between 100 and 150° lasting for 2 to 4 hours.

M. A closure member for use in a method for manufacturing a polymeric cast substrate having two opposite main surfaces and a lateral edge surface by filling a molding cavity with a polymerizable composition, the molding cavity being formed from two mold parts corresponding to the two opposite main surfaces and a closure member corresponding to the lateral edge surface, the closure member having a contacting surface facing the molding cavity, wherein the contacting surface of the closure member intended to be in contact with the polymerizable composition contains a catalyst or an initiator and the catalyst or the initiator is suitable for triggering the polymerization of the polymerizable composition.

M1. A closure member for use in a method for manufacturing a polymeric cast substrate as described in any one of items A-L.

M2. The closure member according to item M-M1, wherein the closure member is an adhesive tape.

M3. The closure member according to any one of items M-M2, wherein the closure member is an adhesive tape containing an adhesive layer and the catalyst or the initiator is present in the adhesive layer.

M4. The closure member according to any one of items M-M3, wherein the closure member is an adhesive tape containing an adhesive layer and the catalyst or the initiator is present at the surface of the adhesive layer.

M5. The closure member according to any one of items M-M4, wherein the polymerizable composition comprises a mixture of one or more polyisocyanate(s) with one or more polythiol(s) or polyol(s).

M6. The closure member according to item M-M4, wherein the polymerizable composition comprises a mixture of one or more polyisocyanate(s) with one or more polythiol(s).

M6'. The closure member according to item M-M4, wherein the polymerizable composition comprises a mixture of one or more polyisocyanate(s) with one or more polyol(s).

M7. The closure member according to any one of items M-M4, wherein the polymerizable composition comprises an allyl monomer or allyl oligomer such as diethylene glycol bis(allyl carbonate), oligomer of diethylene glycol bis(allyl carbonate), ethylene glycol bis(allyl carbonate), oligomer of ethylene glycol bis(allyl carbonate), bisphenol A bis(allyl carbonate), oligomer of bisphenol A bis(allyl carbonate), diallyl phthalate, diallyl isophthalate, diallyl terephthalate or mixtures thereof.

M8. The closure member according to any one of items M-M7, wherein the polymerizable composition comprises a bulk catalyst or a bulk initiator, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate (KSCN) or bismuth trineodecanoate, or mixtures thereof, or the bulk initiator being chosen in particular from organic peroxides, organic azo compounds or mixtures thereof.

M9. The closure member according to any one of items M-M8, wherein the closure member comprises a catalyst or an initiator, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate (KSCN) or bismuth trineodecanoate, or mixtures thereof, or the bulk initiator being chosen in particular from organic peroxides, organic azo compounds or mixtures thereof.

M10. The closure member according to any one of items M-M9, wherein the catalyst of the closure member is the same as the bulk catalyst.

M10'. The closure member according to any one of items M-M9, wherein the initiator of the closure member is the same as the bulk initiator.

M11. The closure member according to any one of items M-M10', wherein the catalyst of the closure member is different than the bulk catalyst.

M11'. The closure member according to any one of items M-M10', wherein the catalyst of the closure member is different than the bulk initiator.

M12. The closure member according to any one of items M-M11', wherein the polymerizable composition further comprises an internal mold release agent chosen from fluorine-containing nonionic surfactants, alkyl quaternary ammonium salts, acid phosphate ester, higher fatty acid ester, or silicon-containing nonionic surfactants.

M13. The closure member according to any one of items M-M12, wherein the closure member further comprises a water scavenging agent.

M14. The closure member according to any one of items M-M13, wherein the polymeric cast substrate is an optical article such as an ophthalmic lens.

M15. The closure member according to any one of items M-M14, wherein the polymerization conditions of the curing step include:
- a curing start temperature between 35 and 60° C lasting for 4 to 8 hours, gradually raising the temperature for 8 to 10 hours until reaching a curing final temperature between 110 and 150° C, then keeping constant at said final temperature for 4 to 8 hours; or
- a curing temperature between 100 and 150° lasting for 2 to 4 hours.

N. A method for manufacturing the closure member according to any one of items M-M15, comprising the following steps of applying an adhesive layer on a surface of the supporting layer and depositing a catalyst or initiator composition on the adhesive layer.

N1. A method for manufacturing the closure member according to any one of items M-M15, comprising the following steps of mixing an adhesive composition with a catalyst or initiator composition to obtain a mixture and depositing the mixture on a surface of the supporting layer.

O. The method of item N or N1 wherein the deposition is performed by liquid phase deposition, such as spray coating, brush coating, or roller coating, small drop deposition or continuous low debit deposition.

P. Use of a closure member containing a catalyst or an initiator for reducing haze in a polymeric cast substrate, the polymeric cast substrate having two opposite main surfaces and a lateral edge surface,
the polymeric cast substrate being manufactured by filling a molding cavity with a polymerizable composition,
the molding cavity being formed from two mold parts corresponding to the two opposite main surfaces and a closure member corresponding to the lateral edge surface, the closure member having a contacting surface facing the molding cavity, wherein the contacting surface of the closure member intended to be in contact with the polymerizable composition contains the catalyst or the initiator and the catalyst or the initiator is suitable for triggering the polymerization of the polymerizable composition.

P1. A use of a closure member as described in any one of items A-M14.

P2. The use of a closure member according to item P or P1, wherein the closure member is an adhesive tape.

P3. The use of a closure member according to any one of items P-P2, wherein the closure member is an adhesive tape containing an adhesive layer and the catalyst or the initiator is present in the adhesive layer.

P4. The use of a closure member according to any one of items P-P3, wherein the closure member is an adhesive tape containing an adhesive layer and the catalyst or the initiator is present at the surface of the adhesive layer.

P5. The closure member according to any one of items P-P4, wherein the polymerizable composition comprises a mixture of one or more polyisocyanate(s) with one or more polythiol(s) or polyol(s).

P6. The closure member according to item P-P4, wherein the polymerizable composition comprises a mixture of one or more polyisocyanate(s) with one or more polythiol(s).

P6'. The closure member according to item P-P4, wherein the polymerizable composition comprises a mixture of one or more polyisocyanate(s) with one or more polyol(s).

P7. The use of a closure member according to any one of items P-P4, wherein the polymerizable composition comprises an allyl monomer or allyl oligomer such as diethylene glycol bis(allyl carbonate), oligomer of diethylene glycol bis(allyl carbonate), ethylene glycol bis(allyl carbonate), oligomer of ethylene glycol bis(allyl carbonate), bisphenol A bis(allyl carbonate), oligomer of bisphenol A bis(allyl carbonate), diallyl phthalate, diallyl isophthalate, diallyl terephthalate or mixtures thereof.

P8. The use of a closure member according to any one of items P-P7, wherein the polymerizable composition comprises a bulk catalyst or a bulk initiator, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate (KSCN) or bismuth trineodecanoate, or mixtures thereof, or the bulk initiator being chosen in particular from organic peroxides, organic azo compounds or mixtures thereof.

P9. The use of a closure member according to any one of items P-P8, wherein the closure member comprises a catalyst or an initiator, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate (KSCN) or bismuth trineodecanoate, or mixtures thereof, or the bulk initiator being chosen in particular from organic peroxides, organic azo compounds or mixtures thereof.

P10. The use of a closure member according to any one of items P-P9, wherein the catalyst of the closure member is the same as the bulk catalyst.

P10'. The use of a closure member according to any one of items P-P9, wherein the catalyst of the closure member is the same as the bulk initiator.

P11. The use of a closure member according to any one of items P-P10', wherein the catalyst of the closure member is different than the bulk catalyst.

P11'. The use of a closure member according to any one of items P-P10', wherein the catalyst of the closure member is different than the bulk initiator.

P12. The use of a closure member according to any one of items P-P11', wherein the polymerizable composition further comprises an internal mold release agent chosen from fluorine-containing nonionic surfactants, alkyl quaternary ammonium salts, acid phosphate ester, higher fatty acid ester, or silicon-containing nonionic surfactants.

P13. The use of a closure member according to any one of items P-P12, wherein the closure member further comprises a water scavenging agent.

P14. The use of a closure member according to any one of items P-P13, wherein the polymeric cast substrate is an optical article such as an ophthalmic lens.

P15. The use of a closure member according to any one of items P-P14, wherein the polymerization conditions of the curing step include
- a curing start temperature between 35 and 60° C lasting for 4 to 8 hours, gradually raising the temperature for 8 to 10 hours until reaching a curing final temperature between 110 and 150° C, then keeping constant at said final temperature for 4 to 8 hours; or
- a curing temperature between 100 and 150° lasting for 2 to 4 hours.

P16. The use of a closure member according to any one of items P-P15, wherein the closure member is obtained as described in any one of items N-O.

This summary does not list all necessary characteristics, and therefore, subcombinations of these characteristics may also constitute an invention.

### Brief description of drawings

For a more complete understanding of the description provided herein and the advantages thereof, reference is now made to the brief descriptions below, taken in connection with the accompanying drawings and detailed description, wherein like reference numerals represent like parts.

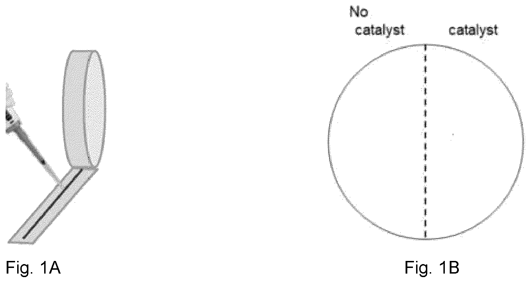

Figure 1A is a schematic view of catalyst deposition on a closure member.

Figure 1B is a schematic view of a mold assembly wherein one half of the closure member comprises a catalyst, while the other half does not contain any catalyst.

### Detailed description

In the description which follows the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

According to a first aspect, the present disclosure relates to a method for manufacturing a polymeric cast substrate having two opposite main surfaces and a lateral edge surface, the method comprising the steps of:
- forming a molding cavity from two mold parts corresponding to the two opposite main surfaces and a closure member corresponding to the lateral edge surface, the closure member having a contacting surface facing the molding cavity;
- filling the molding cavity with a polymerizable composition, as a result of which the contacting surface of the closure member comes into contact with the polymerizable composition;
- curing the polymerizable composition so as to obtain the polymeric cast substrate; wherein the contacting surface of the closure member contains a catalyst or an initiator suitable for triggering the polymerization of the polymerizable composition.

The filling of the molding cavity with a polymerizable composition may be carried out by puncturing the closure member with a filling nozzle in order to introduce the polymerizable composition into the molding cavity and removing the filling nozzle once the filling is completed. The filling of the molding cavity may also be carried out by arranging the closure member so that the contacting surface of the closure member partially covers the peripheral edges of the two mold parts, leaving an opening for the filling nozzle comprising the polymerizable composition to access the molding cavity and to fill it with the polymerizable composition. After filling, the filling nozzle is removed and the opening in covered by the closure member so that the closure member fully covers the peripheral edges of the two mold parts and that the contacting surface of the closure member comes into contact with the polymerizable composition.

The closure member may be made of a flexible material that can securely seal the casting mold assembly. It may be made of a polymer material that is compatible with the polymerizable composition and can withstand the curing process.

The surface of the closure member may contain a catalyst or an initiator suitable for triggering the polymerization of the polymerizable composition.

Initiators are compounds that start the polymerization reaction by generating the reactive species that can initiate the formation of polymer chains. They break down into radicals or other active species when activated, which then react with monomers or oligomers to initiate the polymerization process.

Catalysts are substances that accelerate the rate of a chemical reaction without being consumed in the reaction itself. In polymerization reactions, catalysts can facilitate the formation of polymer chains by lowering the activation energy required for the reaction to proceed.

The catalyst or the initiator may be a temperature-sensitive and/or a photocatalyst that activates the polymerization process at a specific temperature range and/or light. Photocatalysts may be activated by UV light.

The skilled person knows how to adjust the properties of the closure member, such as thickness or flexibility, to accommodate different polymerizable compositions and molding requirements.

The closure member may be an adhesive tape or a gasket.

The closure member may be an adhesive tape containing an adhesive layer, wherein the catalyst or the initiator is present in the adhesive layer or at the surface of the adhesive layer.

In some embodiments, the contacting surface of the adhesive tape may be the surface of the adhesive layer.

Adhesive tapes may be pressure-sensitive tapes that exhibit adhesive properties that are activated by the application of pressure, making it an advantageous solution for temporary sealing needs.

In some embodiments, the polymerizable composition may comprise a mixture of one or more polyisocyanate(s) with one or more polythiol(s) or polyol(s).

In some embodiments, the polymeric cast substrate may be a polythiourethane.

In some embodiments, the polymeric cast substrate may be a polyurethane.

In some embodiments, the polythiol may be a dithiol or a trithiol or a tetratriol.

In some embodiments, the polyisocyanate may be an aromatic or a non-aromatic polyisocyanate.

As used herein, a thiourethane polymer may typically be from the mixture of one or more e.g. two diisocyanate monomers or oligomers with one or more polythiol monomers or oligomers or one or more monomers or oligomers having an epithio function (epithio compound). Polythiourethane are cross-linked polymers obtained from monomers or oligomers comprising a polyisocyanate monomer or oligomer, for example an aromatic polyisocyanate monomer or oligomer, and a polythiol monomer or oligomer, or a monomer or oligomer having an epithio function.

A monomer or oligomer having epithio function may be selected from bis(2,3-epithiopropyl)sulfide, bis(2,3-epithiopropyl)disulfide and bis[4-(beta epithiopropylthio)phenyl]sulfide, bis[4-(beta -epithiopropyloxy)cyclohexyl]sulfide.

As used herein, a polyurethane polymer may typically be from the mixture of one or more e.g. two diisocyanate monomers or oligomers with one or more polyol monomers or oligomers.

The skilled person may formulate the polymerizable composition with specific ratios or concentrations of the polythiol and polyisocyanate or polyisothiocyanate components according to his/her needs. For example, the amounts of polyisocyanate or polyisothiocyanate monomers or oligomers and polythiol monomers or oligomers may be adapted so that the ratio NCX/SH for the mixture of polyisocyanate or isothiocyanate monomers or oligomers and polythiol monomers or oligomers may range from 4:1 to 30:1 or the ratio SH/NCX for the mixture of polyisocyanate or isothiocyanate monomers or oligomers and the polythiol monomers or oligomers may range from 4:1 to 30:1.

For example, said monomers or oligomers may comprise a diisocyanate and a trithiol. For example, the polythiourethane may be a polythiourethane with a refractive index of greater than 1.50, in particular of from 1.55 to 1.8, more particularly of 1.6 to 1.7. In some embodiments the polythiol may be 2,3-bis((2-mercaptoethyl)thio)-1 -propanethiol.

The polythiol may have the formula R'(SH)n', in which n' is an integer from 2 to 6 and preferably 3 to 4, and R' is an organic group of valency equal to n'.

The polythiol may be selected from the group consisting of pentaerythritol tetrakis mercaptoproprionate, 1-(1'mercaptoethylthio)-2,3-dimercaptopropane, 1-(2'-mercaptopropylthio)-2,3-dimercaptopropane, 1-(-3'mercaptopropylthio)-2,3 dimercaptopropane, 1-(-4'mercaptobutylthio)-2,3 dimercaptopropane, 1-(5'mercaptopentylthio)-2,3 dimercapto-propane, 1 -(6'-mercaptohexylthio)-2,3-dimercaptopropane, 1,2-bis(-4'-mercaptobutylthio)-3-mercaptopropane, 1,2-bis(-5'mercaptopentylthio)-3-mercaptopropane, 1,2-bis(-6'-mercaptohexyl)-3-mercaptopropane, 1,2,3-tris(mercaptomethylthio)propane, 1,2,3-tris(-3'-mercaptopropylthio)propane, 1,2,3-tris(-2'-mercaptoethylthio)propane, 1,2,3-tris(-4'-mercaptobutylthio) propane, 1,2,3-tris(-6'-mercaptohexylthio)propane, methanedithiol), 1,2-ethanedithiol, 1,1-propanedithiol, 1,2-propanedithiol, 1,3-propanedithiol, 2,2-propanedithiol, 1,6-hexanethiol-1,2,3-propanetrithiol, and 1,2-bis(-2'-mercaptoethylthio)-3-mercaptopropane.

The polyisocyanate or isothiocyanate may be selected from the group consisting of tolylene diisocyanate or diisothiocyanate, phenylene, diisocyanate or diisothiocyanate, ethylphenylene diisocyanate, isopropyl phenylene diisocyanate or diisothiocyanate, dimethylphenylene diisocyanate or diisothiocyanate, diethylphenylene diisocyanate or diisothiocyanate, diisopropylphenylene diisocyanate or diisothiocyanate, trimethylbenzyl triisocyanate or triisothiocyanate, xylylene diisocyanate or diisothiocyanate, benzyl triiso(thio)cyanate, 4,4'-diphenyl methane diisocyanate or diisothiocyanate, naphtalene diisocyanate or diisothiocyanate, isophorone diisocyanate or diisothiocyanate, bis(isocyanate or isothiocyanate methyl) cyclohexane, hexamethylene diisocyanate or diisothiocyanate and dicyclohexylmethane diisocyanate or diisothiocyanate.

In some embodiments, the polymerizable composition may comprise 2,3-bis((2-mercaptoethyl)thio)-1-propanethiol and m-xylylene diisocyanate.

In some embodiments, the polymerizable composition may comprise a mixture of m-xylylene diisocyanate and pentaerythritol tetrakis mercaptopropionate or a mixture of m-xylylenediisocyanate and bis (mercaptoethyl) trithioglycerin.

In some embodiments, the polymerizable composition comprises an allyl monomer or allyl oligomer such as diethylene glycol bis(allyl carbonate), oligomer of diethylene glycol bis(allyl carbonate), ethylene glycol bis(allyl carbonate), oligomer of ethylene glycol bis(allyl carbonate), bisphenol A bis(allyl carbonate), oligomer of bisphenol A bis(allyl carbonate), diallyl phthalate, diallyl isophthalate, diallyl terephthalate or mixtures thereof.

For example, CR39 is a blend of allyl monomers and oligomers derived from diethylene glycol bis(allyl carbonate).

It should be understood that the one allyl monomer or allyl oligomer (also called hereinafter the allyl component) can be a single allyl monomer, a single allyl oligomer, a mixture of two or more allyl monomers, a mixture of two or more allyl oligomers or a mixture of one or more allyl monomer with one or more allyl oligomer.

The allyl component may be provided as part of an allyl composition comprising more than 95%, in particular more than 97%, more particularly more than 99% allyl monomers or allyl oligomers by mass relative to the total mass of the allyl composition.

The allyl composition may comprise residual moisture, for example 0.003 to 0.04% of water by mass relative to the total mass of the allyl composition.

In the case where the allyl component is provided as part of an allyl composition, it should be understood that m_{allyl} is the mass of the allyl component present in the allyl composition, thus excluding, for example, water and impurities, which are not allyl monomers or oligomers, present in the allyl composition.

As defined herein, the at least one allyl monomer or allyl oligomer is a compound or a mixture of compounds, wherein all the compounds comprise at least two allyl groups each.

In particular, in the herein disclosed method, the at least one allyl monomer or allyl oligomer may comprise at least 90%, more particularly 95% to 99% by mass relative to m_{allyl} of a compound selected in the group consisting of diethylene glycol bis(allyl carbonate), oligomers of diethylene glycol bis(allyl carbonate), ethylene glycol bis(allyl carbonate), oligomers of ethylene glycol bis(allyl carbonate), bisphenol A bis(allyl carbonate), oligomers of bisphenol A bis(allyl carbonate), diallyl phthalate, diallyl isophthalate, diallyl terephthalate, and mixtures thereof.

It should be understood that, in the oligomers of diethylene glycol bis(allyl carbonate), of ethylene glycol bis(allyl carbonate), or of bisphenol A bis(allyl carbonate), the repeated unit is the diethylene glycol carbonate unit, the ethylene glycol carbonate unit or the bisphenol A carbonate unit respectively.

In the herein disclosed method, the at least one allyl monomer or allyl oligomer may comprise 1% to 10%, in particular 1% to 5% by mass relative to m_{allyl} of a monomer represented by formula (I): 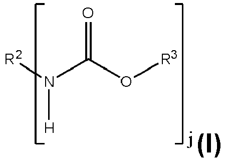 wherein R2 is a polyvalent linking group that is free of urethane linkages; R3 is a residue of a material having a single hydroxy group and at least one allyl group, R being free of urethane linkages, and j is a number from 2 to 4.

Monomers of formula (I) are described in US 2003/0173551 A1.

For example, R2 may be a residue of a cycloaliphatic diisocyanate selected from isophorone diisocyanate, cyclohexane diisocyanate, methylcyclohexane diisocyanate, bis(isocyanatomethyl)cyclohexane, bis(isocyanatocyclohexyl)methane, bis(isocyanatocyclohexyl)-2,2-propane, bis(isocyanatocyclohexyl)-1,2-ethane, and mixtures thereof, and j is 2.

For example R3 may be a residue selected from C2-C4 alkylene glycol allyl ether, poly(C2-C4 alkylene glycol) allyl ether (such as a residue selected from polyethylene glycol) allyl ether, poly(1,2-propylene glycol) allyl ether and mixtures thereof), trimethylol propane di(allyl ether), trimethylol ethane di(allyl ether), pentaerythritol tri(allyl ether), di-trimethylol propane tri(allyl ether) and mixtures thereof.

Monomers of formula (I) may be comprised in the allyl component in order to prevent the formation of so-called "fern" defects, which are observable on tinted lenses.

One example of a monomer according to formula (I) may be CR39-E provided by PPG.

The at least one allyl monomer or allyl oligomer may comprise 95% to 99% by mass relative to m_{allyl} of a mixture of diethylene glycol bis(allyl carbonate) and oligomers of diethylene glycol bis(allyl carbonate) and 1% to 5% by mass relative to m_{allyl} of a monomer of formula (I). The diethylene glycol bis(allyl carbonate) may represent 90% to 99% of the total mass of the mixture of diethylene glycol bis(allyl carbonate) and oligomers of diethylene glycol bis(allyl carbonate).

The polymerizable composition may comprise at least a bulk catalyst or at least a bulk initiator, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate (KSCN) or bismuth trineodecanoate, or mixtures of catalysts thereof, or the bulk initiator being chosen in particular from organic peroxides, organic azo compounds or mixtures of initiators thereof.

The bulk catalyst may be selected from organometallic salts based on bismuth, lead, tin, antimony, uranium, cadmium, cobalt, thorium, aluminum, mercury, zinc, nickel, cerium, molybdene, vanadium, copper, manganese or zirconium; phosphines. For example, the bulk catalyst may be chose from dibutyltin dilaurate (DBTDL), dibutyltin dichloride (DBTDC), butyl chlorotin dihydroxide, butyltin tris (2-ethylhexoate), stannous octoate (tin 2-ethylhexanoate), dibutyltin diacetate, dibutyltin oxide, dimethyltin dichloride, dibutyltin distearate, dibutyltin mercaptide, tin octylate, triphenyltin acetate, triphenyltin hydroxide, butyl stannoic acid, dioctyltin dilaurate and dioctyltin maleate, potassium thiocyanate (in the presence of crown ether), sodium thiocyanate (in the presence of crown ether) or lithium thiocyanate (in the presence of crown ether), cobalt naphthenate, phosphines, such as triphenylphosphine.

The bulk catalyst may be selected from amine catalysts which may be chosen from aliphatic or aromatic tertiary amines preferably containing a supplemental heteroatom in the ring or functional groups having a positive inductive and/or positive mesomeric effect (for example, alkyl groups or amino groups). Examples include 1,4-diazabicyclo[2.2.2]octane (DABCO), triethylamine, quinuclidine, 2,2'-dimorpholinodiethylether, N,N-dimethylpiperazine, N,N-dimethylcyclohexylamine, 1-methylimidazole, 2-methyl-1-vinylimidazole, 1-allylimidazole, 1-phenylimidazole, 1,2,4,5-tetramethylimidazole, 1 (3-aminopropyl)imidazole, 4-dimethylaminopyridine, 4-pyrrolidino-pyridine, 4-morpholinopyridine, 4-methylpyridine, N-dodecyl-2-methylimidazole, triazines such as tris(dimethylaminopropyl) hexahydrotriazine, dimethylbenzylamine, bis-dimethylamino-ethylether and pentamethyl diethylenetriamine, 1,8-diazabicyclo [5.4.0] undec-7-ene (DBU), 1,5-diazabicyclo [4.3.0] non-5-ene (DBN) and 4-dimethylaminopyridine (DMAP).

The bulk initiator may be selected from organic peroxides. Examples of a suitable organic peroxide include dialkyl peroxides, such as diisopropyl peroxide and di-t-butyl peroxide; ketone peroxides such as methyl ethyl ketone peroxide, methyl isopropyl ketone peroxide, acetylacetone peroxide, methyl isobutyl ketone peroxide and cyclohexane peroxide; peroxydicarbonates such as diisopropyl peroxydicarbonate, bis(4-t-butylcyclohexyl) peroxydicarbonate, di-sec-butyl peroxydicarbonate and isopropyl-sec-butylperoxydicarbonate; peroxyesters such as t-butyl peroxy-2-ethylhexanoate and t-hexyl peroxy-2-ethylhexanoate; diacyl peroxides such as benzoyl peroxide, acetyl peroxide and lauroyl peroxide; peroxyketals such as 2,2-di(tert-butylperoxy)butane, 1,1-di(tert-butylperoxy)cyclohexane and 1,1-bis(tert-butylperoxy)3,3,5-trimethylcyclohexane; and mixtures thereof.

The bulk initiator may be selected from organic azo compounds. Examples of a suitable organic azo compound include 2,2'-azobisisobutyronitrile, dimethyl 2,2'-azobis(2-methylpropionate), 2,2'-azobis(2-methylbutyronitrile), 2,2'-azobis(2,4-dimethylvaleronitrile), 4,4'-azobis(4-cyanopentanoic acid), and mixtures thereof.

The bulk catalyst may be selected from benzophenone, methyl benzophenone, xanthones, acylphosphine oxide type such as 2,4,6-trimethylbenzoyldiphenyl phosphine oxide, 2,4,6-trimethylbenzoylethoxydiphenyl phosphine oxide, bisacylphosphine oxides (BAPO), benzoin and benzoin alkyl ethers like benzoin methyl ether, benzoin isopropyl ether.

The bulk catalyst may be selected from haloalkylated aromatic ketones such as chloromethylbenzophenones; benzoin ethers such as benzoin methyl ether, benzoin ethyl ether, benzoin isopropyl ether, benzoin isobutylether ether, benzoin, benzyl, benzyl disulfide; dialkoxyacetophenones such as diethoxyacetophenone and α,α-dimethoxy-α-phenylacetophenone, benzylideneacetophenone, benzophenone, acetophenone; hydroxy ketones such as (1-[4-(2-hydroxyethoxy)-phenyl]-2-hydroxy-2-methyl-1-propan-1-one), 2,2-di-sec-butoxyacethophenone, 2,2-diethoxy-2-phenyl-acetophenone, 1-hydroxy-cyclohexyl-phenyl-ketone and 2-hydroxy-2-methyl-1-phenylpropan-1-one; alpha amino ketones, particularly those containing a benzoyl moiety, otherwise called alpha-amino acetophenones, for example 2-methyl 1-[4-phenyl]-2-morpholinopropan-1-one, (2-benzyl-2-dimethyl amino-1-(4-morpholinophenyl)-butan-1-one; monoacyl and bisacyl phosphine oxides and sulphides, such as phenylbis(2,4,6-trimethylbenzoyl)-phosphine oxide; triacyl phosphine oxides; and mixtures thereof.

In some embodiments, the catalyst or initiator of the closure member may be the same as the bulk catalyst or bulk initiator. The catalyst or initiator of the closure member may be the ones cited hereinabove in relation to the bulk catalyst or bulk initiator.

As used herein, the bulk catalyst or bulk initiator may be the catalyst or initiator present in the polymerizable composition.

By utilizing the same catalyst or initiator on both the closure member and within the polymerizable composition, a consistent catalytic environment may be assured across the bulk of the polymerizable composition. The use of a common catalyst or initiator also simplifies the manufacturing process by reducing the number of different materials that need to be handled and stored. This can lead to cost savings and a reduction in the complexity of the production line, as there is no need to differentiate between catalysts or initiators for the closure member and the polymerizable composition during the manufacturing process. An additional benefit of employing the identical catalyst or initiator lies in the fact that the manufacturing process consistently utilizes the same process to initiate the activation of the catalyst or initiator, which is contained within the polymerizable composition as well as distributed on the surface of the closure member.

In some embodiments, the catalyst or the initiator of the closure member may be different than the bulk catalyst or bulk initiator.

In this case, the catalyst or the initiator of the closure member may be also chosen in particular from nitrogen containing compounds such as primary, secondary or tertiary amines or 3,5-lutidine, such as triethylamine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate (KSCN) or bismuth trineodecanoate, or mixtures of catalysts thereof, or the bulk initiator being chosen in particular from organic peroxides, organic azo compounds or mixtures of initiators thereof, as described above.

By employing a catalyst or an initiator on the closure member that is distinct from the bulk catalyst or bulk initiator, a controlled initiation of polymerization at the interface between the closure member and the polymerizable composition may be obtained. The differential reactivity between the catalyst or the initiator of the closure member and the bulk catalyst or the bulk initiator ensures that a premature curing may occur at the edge region, while the main body of the polymerizable composition cures at a controlled rate.

The use of a distinct catalyst or initiator on the closure member may also provide the flexibility to optimize the polymerization kinetics at the interface independently of the bulk polymerization process. This enables the selection of a catalyst or an initiator of the closure member with a reactivity that is high enough to quickly form a barrier against component migration from the closure member without adversely affecting the overall curing process of the polymerizable composition. As a result, the integrity of the polymeric cast substrate is maintained without introducing new defects such as cracks that could arise from an overly rapid polymerization at the edges.

The polymerizable composition may further comprise an internal mold release agent chosen from fluorine-containing nonionic surfactants, alkyl quaternary ammonium salts, acid phosphate ester, higher fatty acid ester, or silicon-containing nonionic surfactants.

By incorporating an internal mold release agent into the polymerizable composition, the demolding process is facilitated, reducing the likelihood of damage to the polymeric cast substrate's surface during removal from the mold. This results in a smoother surface finish and contributes to the production of high-quality optical lenses with fewer defects. For example, Zelec UN sold by Stephan Company and Mitsui Chemical may be selected as a demolding agent.

The closure member may further comprise a water scavenging agent.

The occurrence of carbon dioxide bubbles during the polymerization process may thus be minimized, even suppressed. Indeed, the water scavenging agents help capture any moisture that may be present during the molding process, thereby reducing the likelihood of bubble formation and ensuring a higher quality polymeric cast substrate, as moisture can interfere with the polymerization reaction or cause defects in the resulting polymeric cast substrate.

The water scavenging agent can be chosen from desiccants or moisture-absorbing materials. These agents actively attract and bind with water molecules, preventing their presence in the molding environment and ensuring a dry and controlled atmosphere.

The polymeric cast substrate may be an optical article such as an ophthalmic lens.

In some embodiments, said optical article may be a lens.

In some embodiments, said optical article may be a semi-finished lens or a finished lens.

As herein defined, an ophthalmic lens may be a lens which is designed to be used in monocles or in eyeglasses (including sunglasses, goggles and safety glasses). As defined herein, contact lenses are not ophthalmic lenses. Ophthalmic lenses are typically used to protect the eye and/or correct the sight. Ophthalmic lenses can be uncorrective ophthalmic lenses (also called plano or afocal lenses) or corrective ophthalmic lenses. A corrective lens may be a unifocal, a bifocal, a trifocal or a progressive lens. As defined herein, ophthalmic lenses can be finished lenses of semi-finished lenses. A semi-finished lens undergoes various treatment steps such as surfacing, coloring, coating and edging before being finally included in eyeglasses or in a monocle. A finished lens is ready to be included in eyeglasses or in a monocle.

The optical article may be included, without limitation, in glasses, in sunglasses, ski goggles, sport lenses, augmented reality and virtual reality lenses, magnifying lenses, protective lenses and visors, for example motorcycle visors and helmets.

A polymeric cast substrate may further undergo various treatment steps such as surfacing, coloring, coating and edging. In some embodiments the annealing method is carried out on a lens made or obtained by casting or injection molding, and the method for annealing is carried out prior to conducting surfacing or edging or prior to both edging and surfacing or prior to conducting any lens finishing step. It is also to be understood that the methods herein disclosed may be carried out on one lens or in more than one lens simultaneously.

Post curing treatments may include:
- Annealing the lens. The annealing helps relaxing internal stresses that may have built up in the lens in the previous steps of the method (in particular during the curing step). The annealing may comprise or consist of 45 min to 1h30 of heating at a temperature of 85 to 115°C.
- In the case of a corrective ophthalmic lens, surfacing of the lens, in particular surfacing of a back face of the lens, i.e. the side of the lens that is the closest to the eye of the wearer. The surfacing helps adjusting the geometry of the lens to give it the desired corrective power.
- Applying a varnish improving the cosmetics and/or the scratch resistance of the lens.
- Applying an anti-reflective coating.
- Polishing the lens.
- Edging the lens.

The polymerization conditions of the curing step may include:
- a curing start temperature between 35 and 60° C lasting for 4 to 8 hours, gradually raising the temperature for 8 to 10 hours until reaching a curing final temperature between 110 and 150° C, then keeping constant at said final temperature for 4 to 8 hours; or
- a curing temperature between 100 and 150° lasting for 2 to 4 hours.

The temperature may be gradually lowered to a temperature between 65°C to 90°C for disassembly. By initiating the polymerization process at a controlled lower temperature range between 35 and 60°C for a duration of 4 to 8 hours, the method allows for a gradual and uniform onset of the polymerization reaction. This controlled initiation helps in reducing the occurrence of defects such as shrinkage, warping, or internal stresses that could compromise the optical quality of the polymeric cast substrate. The gradual increase in temperature ensures that the polymerization progresses steadily, minimizing the risk of uneven curing which can lead to areas of different refractive indices within the polymeric cast substrate.

Subsequently, raising the temperature to a final curing range between 110 and 150°C for 8 to 10 hours ensures that the polymerization reaction is completed. This higher temperature phase allows for the thorough cross-linking of the monomers or oligomers. The specified duration of the final curing phase is optimized to ensure that the polymer network is fully developed, which contributes to the durability and longevity of the lens while maintaining its optical clarity.

According to another aspect, the present disclosure relates to a closure member for use in a method for manufacturing a polymeric cast substrate having two opposite main surfaces and a lateral edge surface by filling a molding cavity with a polymerizable composition, the molding cavity being formed from two mold parts corresponding to the two opposite main surfaces and a closure member corresponding to the lateral edge surface, the closure member having a contacting surface facing the molding cavity, wherein the contacting surface of the closure member intended to be in contact with the polymerizable composition contains a catalyst or an initiator and the catalyst or the initiator is suitable for triggering the polymerization of the polymerizable composition.

The closure member, the polymerizable composition and the catalyst(s) or initiator(s) are as described previously.

According to yet another aspect, the present disclosure relates to a use of a closure member containing a catalyst or an initiator for reducing haze in a polymeric cast substrate, the polymeric cast substrate having two opposite main surfaces and a lateral edge surface,
the polymeric cast substrate being manufactured by filling a molding cavity with a polymerizable composition,
the molding cavity being formed from two mold parts corresponding to the two opposite main surfaces and a closure member corresponding to the lateral edge surface, the closure member having a contacting surface facing the molding cavity,
wherein the contacting surface of the closure member intended to be in contact with the polymerizable composition contains the catalyst or the initiator and the catalyst or the initiator is suitable for triggering the polymerization of the polymerizable composition.

The closure member, the polymerizable and the catalyst(s) or the initiator(s) are as described previously.

According to another aspect, the present disclosure relates to a method for manufacturing the closure member as previously described, the method comprising the following steps of applying an adhesive layer on a surface of a supporting layer and depositing a catalyst or initiator composition on the adhesive layer, or mixing an adhesive composition with a catalyst or initiator composition to obtain a mixture and depositing the mixture on the surface of the supporting layer.

By "catalyst or initiator composition", it is understood a composition comprising a catalyst or an initiator.

Applying an adhesive layer on a substrate and subsequently depositing a catalyst or initiator composition onto this adhesive layer, or by mixing the adhesive composition with a catalyst or initiator composition before application of the mixture thereof ensures that the catalyst or the initiator comes into contact with the polymerizable composition during the manufacturing process of the polymeric cast substrate. This proximity facilitates the initiation of polymerization at the interface between the closure member and the polymerizable composition, effectively creating a barrier that prevents the migration of closure member's components into the monomer or oligomers. This barrier helps prevent haze formation. The closure member can be prepared in advance and stored until needed, which facilitates the manufacturing process. This preparation method also allows for quality control checks on the closure member before it is used in the polymeric cast substrate manufacturing process, ensuring consistency and reliability in the production of defect-free lenses.

The material for the closure member's substrate can be any suitable material, like plastic, metal, or various resin films and metal foils can also be used.

A substrate that is too thin may not provide sufficient rigidity, leading to potential deformation under the monomer's or oligomer's expansion force, while a substrate that is too thick could reduce flexibility and cause issues with sealing. The skilled person would choose the optimal thickness range to ensure that the substrate can effectively support the adhesive and catalyst or initiator layers.

By "catalyst layer", it is understood a layer comprising a catalyst.

By "initiator layer", it is understood a layer comprising an initiator.

In an embodiment, an adhesive layer may be applied onto a surface of the substrate and a catalyst or initiator composition may be deposited on the adhesive layer. The substrate comprising the adhesive layer and the catalyst or initiator may be dried.

The adhesive layer comprising the catalyst or initiator may be from 10 µm to 100 µm thick, preferably from 10 µm to 60 µm thick.

For example, the closure member may be prepared by using a tape of 2 mm thickness at its center. A thin layer of a catalyst or initiator composition may be applied on the surface of the tape, on the central area thereof. After the catalyst composition or initiator may be dried, the tape is ready to use.

A liquid/solid catalyst or initiator composition may be prepared by dissolving or diluting the catalyst or initiator in a solvent, such as ethanol, methanol, or isopropanol, in a concentration above 0.5% by weight, preferably between 0.5% and 10% by weight, more preferably between 0.5% and 5% by weight. Should the concentration fall below 0.5% by weight, there is a chance to be less accelerate on the formulation gelation, which in turn may cause the dissolution of the adhesive creating haze. A concentration above 10% by weight is not economically advantageous. By limiting the concentration of the catalyst or initiator applied to the closure member to 10% by weight or less, it is ensured that the cost of manufacturing the polymeric cast substrate remains economically advantageous.

The liquid catalyst may also be applied as such, without any solvent.

In an embodiment, the adhesive composition used for the obtention of the adhesive layer and the catalyst or initiator composition are mixed together to obtain a homogeneous mixture. This adhesive-catalyst mixture or adhesive-initiator mixture may be then deposited onto a surface of the substrate and dried.

By "catalyst or initiator mixture", it is understood a mixture comprising a catalyst or an initiator.

The closure member comprising the adhesive layer and the catalyst or the initiator is recovered, ready to be used in the manufacturing process of polymeric cast substrates.

In some embodiments, the deposition may be performed by liquid phase deposition, such as spray coating, brush coating, or roller coating, small drop deposition or continuous low debit deposition. Each of these methods offers advantages in terms of uniformity, control, and efficiency in depositing the adhesive and catalyst or the initiator onto the substrate surface. Independently of the method used, it is preferred to apply the catalyst or initiator at the center of the supporting layer so as to leave the edges of the substrate surface to come into contact with the edges of the mold assembly. The edges of the substrate surface may be masked prior to the liquid deposition of the catalyst or initiator in order to ensure that said catalyst or initiator is applied along the center of the substrate surface. The liquid carrier subsequently evaporates.

Spray coating involves using a spray gun or nozzle to atomize the adhesive and/or the catalyst or the initiator into fine droplets, which are then directed onto the substrate surface. According to an embodiment, the edges of the substrate surface may be masked after the deposition of the adhesive and prior to the deposition of the catalyst or initiator in order to ensure that said catalyst or initiator is applied along the center of the substrate surface. This method allows for precise control over the coating thickness and coverage.

Brush coating involves using a brush or applicator to manually apply the adhesive and/or the catalyst or the initiator onto the substrate surface. According to an embodiment, the edges of the substrate surface may be masked after the deposition of the adhesive and prior to the deposition of the catalyst or initiator in order to ensure that said catalyst or initiator is applied along the center of the substrate surface. This method offers flexibility and control in achieving the desired coating thickness and uniformity.

Roller coating involves using a roller to apply the adhesive and/or the catalyst or the initiator onto the substrate surface. According to an embodiment, the edges of the substrate surface may be masked after the deposition of the adhesive and prior to the deposition of the catalyst or initiator in order to ensure that said catalyst or initiator is applied along the center of the substrate surface. The roller spreads the mixture evenly as it rolls over the substrate, resulting in a uniform coating.

Deposition may also be carried out via small drop deposition or continuous low debit deposition with a needle in order to accurately deposit the catalyst or initiator.

Small drop deposition involves using a needle to apply small droplets of the adhesive and/or the catalyst or the initiator on the surface substrate.

Continuous low debit deposition involves using a needle to continuously apply very small quantities (continuous droplets) of the adhesive and/or the catalyst or the initiator on the surface substrate.

These liquid phase deposition techniques provide options for depositing the adhesive layer and catalyst or the initiator onto the substrate in a controlled and efficient manner, ensuring the formation of a high-quality closure member for use in the manufacturing process of polymeric cast substrates.

### EXAMPLE

Although representative processes and articles have been described in detail herein, those skilled in the art will recognize that various substitutions and modifications may be made without departing from the scope of what is described and defined by the appended claims.

A casting mold assembly containing two unsealed molds is provided.

An adhesive tape is provided as follows. A tape thick of 2 mm at its center is arranged at the peripheral edges of both the unsealed molds so as to form a molding cavity and an opening. Then, the tape on half of the mold assembly is detached for applying the thin layer of a catalyst composition at the center of the tape, as indicated in Figure 1A. After the catalyst composition dried, the tape is reattached on the mold. Thus, half of the edge of the mold assembly is in contact with the tape containing the catalyst while the second half is in contact with the tape without any catalyst, as indicated in Figure 1B. Finally, the mold assembly is put in the vacuum chamber at room temperature for 4 h for complete dry of the catalyst.

Various catalyst compositions solutions are prepared by dissolving a thermal catalyst in ethanol at various concentrations : 0.5% by weight or 1% by weight or 1.5% by weight or 3% by weight, relative to the total weight of the composition.

One tested composition is:

| Function | Chemical | CAS No. |
|---|---|---|
| Monomer | Hexamethylene Diisocyanate | 822-06-0 |
| | Trimethylolpropane tris(thioglycolate) | 10193-96-1 |
| Catalyst | Dimethyltin dichloride | 753-73-1 |
| Releasing agent | Zelec UN | N/A |
| | | |

Various mold assemblies are prepared with each composition.

The molding cavity is filled with the polymerizable composition using a cleaned syringe, and the polymerization is carried out in a regulated electronic oven starting from 45°C for 6 h, then gradually rising to 130°C. After that, the temperature is hold at 130°C for 6 h to obtain full polymerization. Finally, the temperature is cooled down to 80°C and the casting mold assembly is disassembled, and the polymeric cast substrate is recovered. R17 lamp is used for haze observation in polymeric cast substrate.

From the results obtained for each assembly, it is confirmed that the catalyst applied on the closure member can initiate the gelation after filling of the polymerizable composition situated at the edge of the assembly, in contact with the tape containing the catalyst, thus significantly inhibiting haze, even eliminating it. A haze of lower intensity is observed, when the catalyst concentration increases.

## Claims

1. A method for manufacturing a polymeric cast substrate having two opposite main surfaces and a lateral edge surface, the method comprising the steps of:
- forming a molding cavity from two mold parts corresponding to the two opposite main surfaces and a closure member corresponding to the lateral edge surface, the closure member having a contacting surface facing the molding cavity;
- filling the molding cavity with a polymerizable composition, as a result of which the contacting surface of the closure member comes into contact with the polymerizable composition;
- curing the polymerizable composition so as to obtain the polymeric cast substrate; wherein the contacting surface of the closure member contains a catalyst or an initiator suitable for triggering the polymerization of the polymerizable composition.

2. The method of claim 1, wherein the closure member is an adhesive tape containing an adhesive layer and the catalyst or initiator is present in the adhesive layer or at the surface of the adhesive layer.

3. The method of claims 1 or 2, wherein the polymerizable composition comprises a mixture of one or more polyisocyanate(s) with one or more polythiol(s) or polyol(s).

4. The method of any one of claims 1 or 2, wherein the polymerizable composition comprises an allyl monomer or allyl oligomer such as diethylene glycol bis(allyl carbonate), oligomer of diethylene glycol bis(allyl carbonate), ethylene glycol bis(allyl carbonate), oligomer of ethylene glycol bis(allyl carbonate), bisphenol A bis(allyl carbonate), oligomer of bisphenol A bis(allyl carbonate), diallyl phthalate, diallyl isophthalate, diallyl terephthalate or mixtures thereof.

5. The method of any one of claims 1 to 4, wherein the polymerizable composition comprises a bulk catalyst or a bulk initiator, the catalyst being chosen in particular from nitrogen containing compounds such as primary, secondary or tertiary amines, such as triethylamine_or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate or bismuth trineodecanoate, or mixtures thereof, or the bulk initiator being chosen in particular from organic peroxides, organic azo compounds or mixtures thereof.

6. The method of any one of claims 1 to 5, wherein the closure member comprises a catalyst or an initiator, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic compounds, such as dibutyltin dilaurate, potassium thiocyanate or bismuth trineodecanoate, or mixtures thereof, or the bulk initiator being chosen in particular from organic peroxides, organic azo compounds or mixtures thereof.

7. The method of any one of claims 1 to 6, wherein the catalyst or initiator of the closure member is the same as the bulk catalyst or bulk initiator.

8. The method of any one of claims 1 to 7, wherein the catalyst or initiator of the closure member is different than the bulk catalyst or bulk initiator.

9. The method of any one of claims 1 to 8, wherein the closure member further comprises a water scavenging agent.

10. The method of any one of claims 1 to 9, wherein the cast substrate is an optical article such as an ophthalmic lens.

11. A closure member for use in a method for manufacturing a polymeric cast substrate having two opposite main surfaces and a lateral edge surface by filling a molding cavity with a polymerizable composition,
the molding cavity being formed from two mold parts corresponding to the two opposite main surfaces and a closure member corresponding to the lateral edge surface, the closure member having a contacting surface facing the molding cavity,
wherein the contacting surface of the closure member intended to be in contact with the polymerizable composition contains a catalyst or an initiator and the catalyst or initiator is suitable for triggering the polymerization of the polymerizable composition.

12. A method for manufacturing the closure member according to claim 11, comprising the following steps of :
- applying an adhesive layer on a surface of a supporting layer and depositing a catalyst or initiator composition on the adhesive layer, or mixing an adhesive composition with a catalyst or initiator composition to obtain a mixture and depositing the mixture on the surface of the supporting layer.

13. The method of claim 12 wherein the deposition is performed by liquid phase deposition, such as spray coating, brush coating, or roller coating, small drop deposition or continuous low debit deposition.

14. Use of a closure member containing a catalyst or an initiator for reducing haze in a polymeric cast substrate, the polymeric cast substrate having two opposite main surfaces and a lateral edge surface,
the polymeric cast substrate being manufactured by filling a molding cavity with a polymerizable composition,
the molding cavity being formed from two mold parts corresponding to the two opposite main surfaces and a closure member corresponding to the lateral edge surface, the closure member having a contacting surface facing the molding cavity,
wherein the contacting surface of the closure member intended to be in contact with the polymerizable composition contains the catalyst or initiator and the catalyst or initiator is suitable for triggering the polymerization of the polymerizable composition.
